# FASCICULE DE BREVET EUROPEEN

(11) **EP 4 228 874 B1**
(45) Date de publication et mention de la délivrance du brevet: **17.04.2024**
(21) Numéro de dépôt: 21790896.1
(22) Date de dépôt: 13.10.2021
(51) Int. Cl.: B29C 49/56, B29C 49/06

(54) **MOULE DE FABRICATION DE CORPS CREUX EN MATIERE PLASTIQUE**
FORM ZUR HERSTELLUNG VON KUNSTSTOFFHOHLKÖRPERN
MOULD FOR MANUFACTURING PLASTIC HOLLOW BODIES

(30) Priorité: 15.10.2020 FR 2010542
(43) Date de publication de la demande: 23.08.2023
(73) Titulaire: Sidel Participations, 76930 Octeville-sur-Mer (FR)
(72) Inventeur: HELLOUIN, Damien, 76930 Octeville-sur-Mer (FR); SAVARY, Cyrille, 76930 Octeville-sur-Mer (FR)
(74) Mandataire: Sidel Group
(86) Numéro de dépôt international: PCT/EP2021/078306
(87) Numéro de publication internationale: WO 2022/079099

(56) Documents cités:
- CN-A- 109 454 856
- US-A1- 2007 190 202

## Description

Le domaine de l'invention est celui de la conception et de la fabrication de corps creux en matière plastique.

Plus précisément, l'invention concerne un moule de fabrication de corps creux en matière plastique.

Classiquement, les moules utilisés sont du type portefeuille, c'est-à-dire qu'ils comprennent un premier demi-moule et un deuxième demi-moule mobiles l'un par rapport à l'autre autour d'une charnière. CN109454856A divulgue une moule type portefeuille selon la préambule de la revendication 1.

Chaque demi-moule comprend une équerre sur laquelle est montée une coquille présentant une partie de l'empreinte du corps creux à former. Les deux coquilles définissent entre elles un plan de joint. Le plan de joint est de préférence le plus fin possible afin d'éviter la création d'un bourrelet visible sur le corps creux, ce qui rend le corps creux non conforme d'un point de vue esthétique.

Lors de la fabrication, les deux coquilles sont au contact l'une de l'autre pour former une empreinte dans laquelle est formé le corps creux et ainsi limiter l'espace entre les coquilles qui pourrait favoriser la création d'un bourrelet sur le corps creux.

Pour maintenir les coquilles l'une contre l'autre, une solution connue consiste en l'utilisation d'un système de compensation qui comprend une chambre de pression située entre l'une des équerres et la coquille qu'il porte.

Lorsque les deux coquilles sont l'une contre l'autre, la chambre de pression est mise sous pression pour maintenir plaquées l'une contre l'autre les coquilles.

Cette solution présente cependant certains inconvénients.

En effet, un fluide sous pression doit être utilisé pour la mise en pression la chambre de pression. Ce fluide est généralement perdu car non utilisé pour une autre action comme par exemple le soufflage des préformes pour obtenir un corps creux.

Cette solution implique donc une consommation inutile d'énergie, constituée en l'occurrence par de l'air sous pression.

De plus, cela demande un réglage long et fastidieux lors de l'installation de la machine.

Enfin, cette solution requiert un temps de mise sous pression de la chambre de pression, ce qui rallonge le cycle de fabrication.

Une autre technique consiste à supprimer les chambres de pression et à utiliser un système de verrouillage comprenant deux crochets coopérant l'un avec l'autre, un premier crochet étant solidaire du premier demi-moule, le deuxième crochet étant solidaire du deuxième demi-moule.

Cette solution reste cependant perfectible car les crochets doivent être maintenus en fermeture durant l'opération de soufflage des préformes (c'est-à-dire en contact l'un contre l'autre).

Il est donc nécessaire d'alimenter des moyens de maintien en position fermée des crochets durant les opérations de soufflage.

L'invention a notamment pour objectif de palier les inconvénients de l'art antérieur.

Plus précisément, l'invention a pour objectif de proposer une solution qui permette la fabrication de corps creux en matière plastique dont le cycle de fabrication est raccourci par rapport à l'art antérieur.

L'invention a également pour objectif de fournir une telle solution dont la consommation énergétique pour sa mise en oeuvre est réduite par rapport à l'art antérieur.

L'invention a en outre pour objectif de fournir une telle solution qui permette une fabrication de corps creux plus fiable que l'art antérieur.

Ces objectifs, ainsi que d'autres qui apparaîtront par la suite, sont atteints grâce à l'invention qui a pour objet un moule de fabrication de corps creux en matière plastique selon la revendication 1.

L'orientation de la cavité du premier crochet vers l'extérieur du moule permet de fiabiliser la fermeture du moule durant la fabrication, cela sans énergie supplémentaire.

En effet, les moules sont montés sur un carrousel qui tourne lors de la fabrication des corps creux.

Par sa rotation, le carrousel engendre une force centrifuge sur les moules, dont les composants sont repoussés vers l'extérieur.

Le premier crochet est donc également repoussé vers l'extérieur, ce qui le maintien dans la cavité du deuxième crochet, renforçant ainsi la fermeture du moule.

Lors de la fabrication des corps creux, le moule adopte ainsi une position normalement fermée.

Par ailleurs, le jeu fonctionnel permet de limiter l'usure des crochets lors de la fermeture du moule.

En effet, les crochets peuvent s'imbriquer l'un dans l'autre sans risque de frotter l'un contre l'autre, le jeu fonctionnel étant comblé lors du soufflage du corps creux qui a tendance à écarter les demi-moules l'un de l'autre.

Avantageusement, la première surface de retenue et la deuxième surface de retenue sont parallèles l'une par rapport à l'autre.

Ce parallélisme de la première surface de retenue avec la deuxième surface de retenue permet de garantir une bonne coopération desdites surfaces de retenue lorsque le moule est sans sa position fermée et que le corps creux est en cours de soufflage dans le moule.

Le jeu fonctionnel est supérieur ou égal à 0,05 mm et inférieur ou égal à 0,4 mm, et préférentiellement, supérieur ou égal à 0,1 mm et inférieur ou égal à 0,2 mm

De telles gammes de valeurs permettent au jeu fonctionnel d'être à la fois assez conséquent pour éviter l'usure des crochets, et suffisamment réduit pour faciliter la fermeture des crochets sans recours à une énergie dédiée.

Avantageusement, dans la position fermée du moule le premier demi-moule et le deuxième demi-moule définissent à leur contact un plan de joint, et, dans la position de verrouillage du deuxième crochet, la première surface de retenue et/ou la deuxième surface de retenue forment un angle α avec le plan de joint.

L'angle α permet une fermeture et une ouverture facile du moule sans risque d'endommager les crochets lors de l'utilisation du moule.

Dans ce cas, l'angle α est, de préférence, supérieur ou égal à 1 ° et inférieur ou égal à 5°, et de préférence de 2°.

Ces valeurs de l'angle α permettent de réaliser le jeu fonctionnel entre les crochets afin que le jeu fonctionnel soit à la fois assez conséquent pour éviter l'usure des crochets, et suffisamment réduit pour faciliter la fermeture des crochets sans recours à une énergie dédiée.

Selon un mode de réalisation avantageux, le moule comprend des moyens de guidage du déplacement du deuxième crochet entre sa position de verrouillage et sa position déverrouillée, les moyens de guidage étant positionnés en amont des moyens de verrouillage selon un sens de déplacement du moule dans une unité de soufflage d'une machine de fabrication de corps creux en matière plastique.

Le positionnement des moyens de guidage en amont des moyens de verrouillage assure une chronologie sûre durant le procédé de fabrication.

En effet, lorsque le fluide sous pression atteint la préforme destinée à former le corps creux dans le moule, les crochets sont déjà dans leur position de verrouillage.

Ainsi, il n'y a pas de risque que la pression interne au moule provoque l'ouverture du moule.

De préférence, les moyens de guidage comprennent un galet solidaire du deuxième crochet par un doigt, le galet coopérant avec un chemin de cames solidaire d'un bâti de l'unité de soufflage de la machine de fabrication de corps creux en matière plastique.

Le déplacement du deuxième crochet se fait ainsi de manière mécanique sans recours à l'utilisation d'une énergie dédiée.

La machine de fabrication est ainsi moins énergivore et plus sûre de fonctionnement.

Selon un aspect avantageux, l'un du premier demi-moule et du deuxième demi-moule comprend une butée pour définir le jeu fonctionnel entre la première surface de retenue et la deuxième surface de retenue, dans la position de verrouillage du deuxième crochet.

Cette butée permet de garantir un jeu fonctionnel constant dans le temps. Ainsi, l'usure des crochets s'en trouve limitée et la durée de vie de la machine de fabrication améliorée.

De préférence, la butée est une butée de type réglable.

Il est ainsi possible de régler le jeu fonctionnel entre les crochets en fonction des types de demi-moules utilisés et de la pression de soufflage utilisée pour la fabrication des corps creux par exemple.

Moule selon l'une quelconque des revendications précédentes, caractérisé en ce que le deuxième crochet est monté mobile en rotation sur le deuxième demi-moule.

Le mouvement de rotation du deuxième crochet assure un débattement suffisant pour permettre l'ouverture du moule tout en offrant une bonne compacité à l'ensemble.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig. 1] la figure 1 est une vue en perspective de dessus d'un moule selon l'invention, comprenant des moyens de verrouillage, le moule étant dans une position d'ouverture ;
[Fig. 2] la figure 2 est une vue de dessus d'un moule selon l'invention, le moule étant dans une position fermée et les moyens de verrouillage étant dans une position déverrouillée, cette figure comprenant un médaillon de détail à échelle agrandie de crochets des moyens de verrouillage ;
[Fig. 3] la figure 3 est une vue de dessus d'un moule selon l'invention, le moule étant dans une position fermée et les moyens de verrouillage étant dans une position de verrouillage ;
[Fig. 4] la figure 4 est une vue de détail des moyens de verrouillage dans la position de verrouillage, cette figure comprenant un médaillon de détail à échelle agrandie des crochets des moyens de verrouillage.

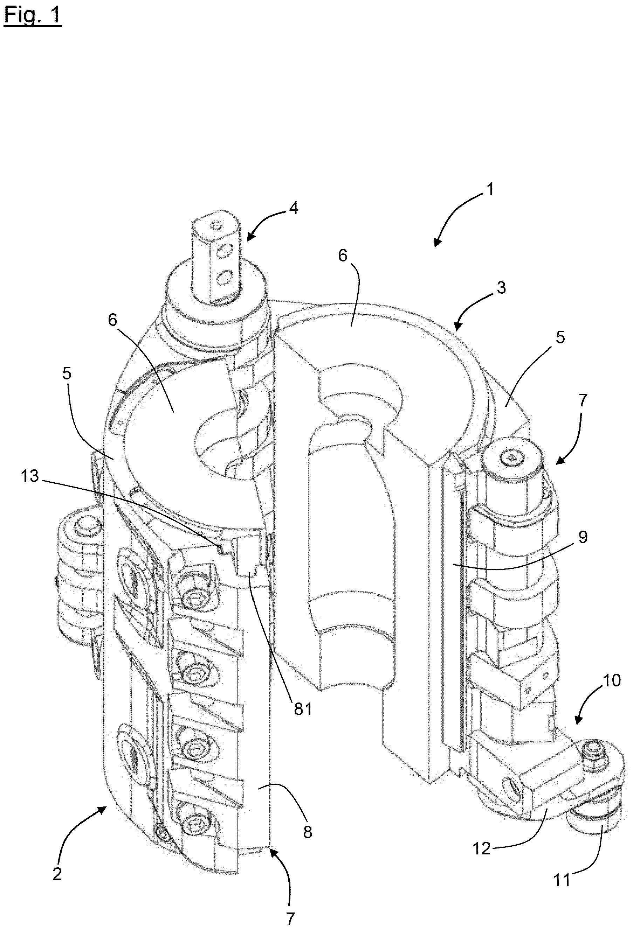

Les figures 1 à 4 illustrent un moule 1 de fabrication de corps creux en matière plastique, selon l'invention.

En référence à la figure 1, le moule 1 comprend :
- un premier demi-moule 2 ;
- un deuxième demi-moule 3, et
- une charnière 4 sur laquelle le premier demi-moule 2 et le deuxième demi-moule 3 sont montés mobiles en rotation.

Le moule 1 est ainsi mobile entre :
- une position fermée dans laquelle le premier demi-moule 2 et le deuxième demi-moule 3 sont au contact l'un de l'autre, et définissent entre eux une empreinte de moulage à l'empreinte de corps creux à fabriquer, et
- une position d'ouverture dans laquelle le premier demi-moule 2 et le deuxième demi-moule 3 sont écartés l'un de l'autre pour permettre l'insertion ou l'extraction d'un corps creux.

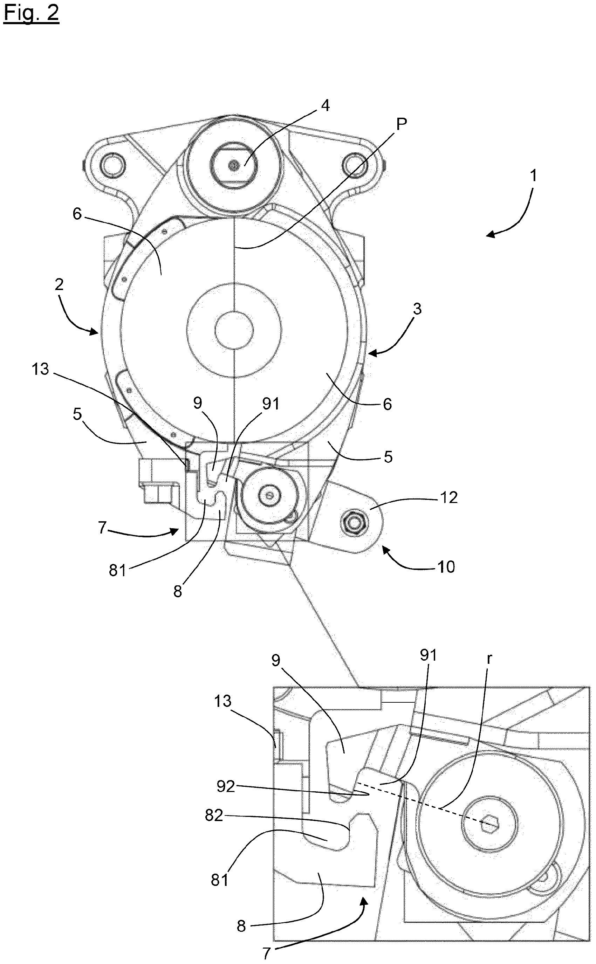

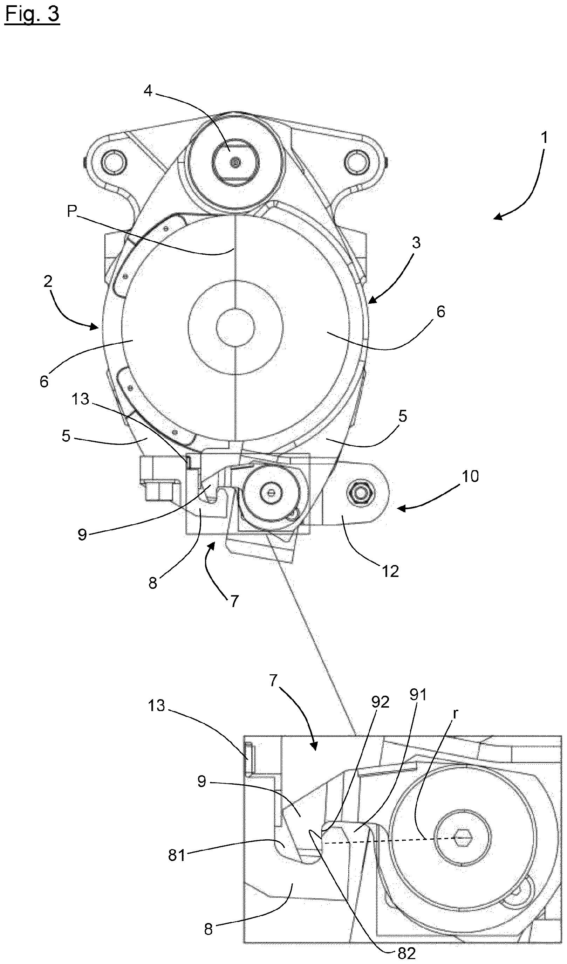

En référence aux figures 2 et 3, dans la position fermée du moule 1 le premier demi-moule 2 et le deuxième demi-moule 3 définissent à leur contact commun un plan de joint P.

Chacun du premier demi-moule 2 et du deuxième demi-moule 3 comprend :
- une équerre 5, et
- une coquille 6 solidarisée à l'équerre 5.

Tel qu'illustré sur les figures 1 à 4, le moule 1 comprend également des moyens de verrouillage 7 en position fermée.

Les moyens de verrouillage 7 comprennent :
- au moins un premier crochet 8 présentant une première cavité 81,
- au moins un deuxième crochet 9 présentant une deuxième cavité 91.

Le premier crochet 8 est monté fixe sur le premier demi-moule 2. Toutefois, le premier crochet 8 peut être ajusté en position sur le premier demi-moule 2, son serrage en position le rend alors fixe par rapport au premier demi-moule 2.

En revanche, le deuxième crochet 9 est monté mobile sur le deuxième demi-moule 3. Plus particulièrement, le deuxième crochet 9 est monté mobile en rotation sur le deuxième demi-moule 3.

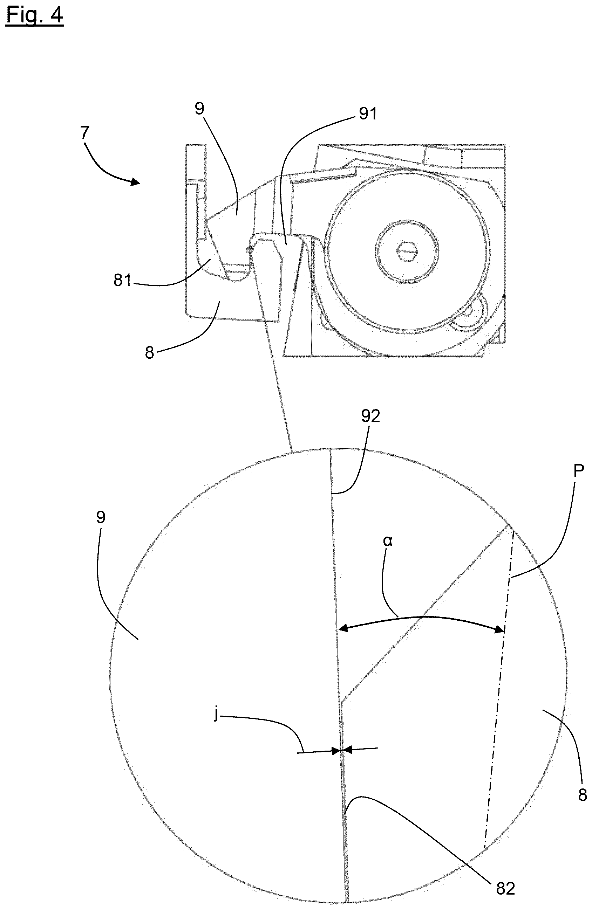

Le deuxième crochet 9 peut ainsi adopter :
- une position de verrouillage, illustrée sur les figures 3 et 4, dans laquelle le premier crochet 8 et le deuxième crochet 9 sont imbriqués l'un dans l'autre, et
- une position déverrouillée, illustrée sur la figure 2, le premier crochet 8 et le deuxième crochet 9 sont écartés l'un de l'autre.

Plus précisément, dans la position de verrouillage des moyens de verrouillage 7, la première cavité 81 et la deuxième cavité 91 sont imbriquées l'une dans l'autre. Au contraire, dans la position déverrouillée des moyens de verrouillage 7, la première cavité 81 et la deuxième cavité 91 sont écartées l'une de l'autre.

Tel que cela est visible sur les médaillons de détail à échelle agrandie des figures 2 et 3, la première cavité 81 du premier crochet 8 est orientée vers l'intérieur du moule 1, et la deuxième cavité 91 du deuxième crochet 9 est orientée vers l'extérieur du moule1.

Toujours en référence aux médaillons de détail à échelle agrandie des figures 2 et 3, le premier crochet 8 comprend une première surface de retenue 82 et le deuxième crochet 9 présente une deuxième surface de retenue 92.

Tel qu'illustré sur la figure 3, la deuxième surface de retenue 92 est en regard de la première surface de retenue 82 dans la position de verrouillage du deuxième crochet 9.

L'expression « en regard » s'entend en ce que la deuxième surface de retenue 92 est parallèle, ou quasiment, à la première surface de retenue 82 lorsque le deuxième crochet 9 est dans la position de verrouillage, et que la deuxième surface de retenue 92 est située la première cavité 81.

Avantageusement, lorsque le moule 1 est dans sa position fermée, et avant une mise sous pression de l'empreinte de moulage définie entre les deux coquilles 6, la deuxième surface de retenue 92 définit un jeu fonctionnel j avec la première surface de retenue 82.

La première surface de retenue 82 et la deuxième surface de retenue 92 sont avantageusement parallèles l'une par rapport à l'autre.

Toutefois, en variante non illustrée, la première surface de retenue 82 et la deuxième surface de retenue 92 pourraient former un angle non nul entre elles.

Selon un mode de réalisation préféré, le jeu fonctionnel j est supérieur ou égal à 0,05 mm et inférieur ou égal à 0,4 mm.

Plus préférentiellement encore, le jeu fonctionnel j est supérieur ou égal à 0,1 mm et inférieur ou égal à 0,2 mm

Selon un aspect avantageux visant à limiter l'usure du premier crochet 8 et du deuxième crochet 9 lors de l'ouverture et de la fermeture du moule 1 et assurer un bon maintien du verrouillage dans la position de verrouillage du deuxième crochet 9, la première surface de retenue 82 et/ou la deuxième surface de retenue 92 forment un angle α avec le plan de joint P, dans la position de verrouillage du deuxième crochet 9.

L'angle α, qui est représenté sur le médaillon de détail à échelle agrandie de la figure 4, est avantageusement supérieur ou égal à 1° et inférieur ou égal à 5°, et est de préférence égal à 2°.

De préférence, la deuxième surface de retenue 92 est plane. Cette deuxième surface de retenue 92 s'étend dans un plan perpendiculaire à un rayon r d'une trajectoire circulaire du deuxième crochet 9.

Tel qu'illustré sur les figures 1, 2 et 3, le moule 1 comprend également des moyens de guidage 10 du déplacement du deuxième crochet 9 entre sa position de verrouillage et sa position déverrouillée.

Les moyens de guidage 10 sont notamment positionnés en amont des moyens de verrouillage 7 selon un sens de déplacement du moule 1 dans une machine de fabrication de corps creux en matière plastique.

En référence à la figure 1, les moyens de guidage 10 comprennent :
- un galet 11 solidaire du deuxième crochet 9 par un doigt 12, le galet 11 coopérant avec un chemin de cames (non représenté) solidaire d'un bâti de l'unité de soufflage de la machine de fabrication de corps creux en matière plastique.

En référence à la figure 2 ou à la figure 3, l'un du premier demi-moule et du deuxième demi-moule comprend une butée 13 pour définir le jeu fonctionnel j entre la première surface de retenue 81 du premier crochet 8 et la deuxième surface de retenue 91 du deuxième crochet 9, dans la position de verrouillage du deuxième crochet 9.

De préférence, la butée 13 est une butée de type réglable.

Par exemple, la butée 13 peut se présenter sous la forme d'une cale pelable.

En fonctionnement, lorsque le moule 1 passe de sa position d'ouverture à sa position fermée, les deux coquilles 5 viennent au contact l'une de l'autre pour former le plan de joint P.

Les moyens de verrouillage 7 sont alors dans leur position déverrouillée. Grâce au galet 11, les moyens de guidage 10 permettent le déplacement du deuxième crochet 9 pour le positionner dans sa position de verrouillage depuis sa position de déverrouillage.

Lorsque le deuxième crochet 9 est dans sa position de verrouillage, et préalablement à la mise en pression de l'empreinte du moule 1, la deuxième surface de retenue 92 est écartée de la première surface de retenue 82 du premier crochet 8 pour définir le jeu fonctionnel j.

La mise en pression de l'empreinte du moule 1 par l'air de soufflage provoque la réduction du jeu fonctionnel j jusqu'à sa disparition totale signifiant le verrouillage complet des moyens de verrouillage 7.

En d'autres termes, l'air de soufflage provoque l'écartement du premier demi-moule 2 par rapport au deuxième demi-moule 3, ce qui tend à réduire le jeu fonctionnel j, cela jusqu'à sa disparition totale.

L'ouverture du moule 1 se fait en sens inverse, dès lors que la pression dans l'empreinte du moule 1 est réduite.

Le jeu fonctionnel j entre la deuxième surface de retenue 92 et la première surface de retenue 82 est alors de nouveau présent, ce qui permet le passage du deuxième crochet 9 de sa position de verrouillage à sa position déverrouillée.

## Revendications

1. Moule (1) de fabrication de corps creux en matière plastique, le moule (1) comprenant :
- un premier demi-moule (2) ;
- un deuxième demi-moule (3) ;
- une charnière (4) sur laquelle le premier demi-moule (2) et le deuxième demi-moule (3) sont montés mobiles en rotation,
le moule (1) étant mobile entre :
- une position fermée dans laquelle le premier demi-moule (2) et le deuxième demi-moule (3) sont au contact l'un de l'autre, et définissent entre eux une empreinte de moulage de corps creux à fabriquer, et
- une position d'ouverture dans laquelle le premier demi-moule (2) et le deuxième demi-moule (3) sont écartés l'un de l'autre ;
le moule (1) comprenant également des moyens de verrouillage (7) en position fermée, les moyens de verrouillage (7) comprenant :
- au moins un premier crochet (8) présentant une première cavité (81), monté fixe sur le premier demi-moule (2),
- au moins un deuxième crochet (9) présentant une deuxième cavité (91), monté mobile sur le deuxième demi-moule (3), le deuxième crochet (9) pouvant adopter :
- une position de verrouillage dans laquelle le premier crochet (8) et le deuxième crochet (9) sont imbriqués l'un dans l'autre, et
- une position déverrouillée dans laquelle la première cavité (81) et la deuxième cavité (91) sont écartées l'une de l'autre,
où la première cavité (81) du premier crochet (8) est orientée vers l'intérieur du moule (1), et la deuxième cavité (91) du deuxième crochet (9) est orientée vers l'extérieur du moule (1), et en ce que le premier crochet (8) comprend une première surface de retenue (82) et le deuxième crochet (9) présente une deuxième surface de retenue (92), la deuxième surface de retenue (92) étant en regard de la première surface de retenue (82) dans la position de verrouillage du deuxième crochet (9), la deuxième surface de retenue (92) définissant un jeu fonctionnel (j) avec la première surface de retenue (82) préalablement à une mise sous pression de l'empreinte de moulage **caractérise en ce que** le jeu fonctionnel (j) est supérieur ou égal à 0,05 mm et inférieur ou égal à 0,4 mm.

2. Moule (1) selon la revendication précédente, **caractérisé en ce que** la première surface de retenue (82) et la deuxième surface de retenue (92) sont parallèles l'une par rapport à l'autre.

3. Moule (1) selon l'une quelconque des revendications précédentes, **caractérisé en ce que** le jeu fonctionnel (j) est supérieur ou égal à 0,1 mm et inférieur ou égal à 0,2 mm

4. Moule (1) selon l'une quelconque des revendications précédentes, caractérisé en ce, dans la position fermée du moule (1) le premier demi-moule (2) et le deuxième demi-moule (3) définissent à leur contact un plan de joint (P), et en ce que, dans la position de verrouillage du deuxième crochet (9), la première surface de retenue (82) et/ou la deuxième surface de retenue (92) forment un angle (α) avec le plan de joint (P).

5. Moule (1) selon la revendication précédente, **caractérisé en ce que** l'angle (α) est supérieur ou égal à 1° et inférieur ou égal à 5°, et de préférence de 2°.

6. Moule (1) selon l'une quelconque des revendications précédentes, **caractérisé en ce qu'**il comprend des moyens de guidage (10) du déplacement du deuxième crochet (9) entre sa position de verrouillage et sa position déverrouillée, les moyens de guidage (10) étant positionnés en amont des moyens de verrouillage (7) selon un sens de déplacement du moule (1) dans une unité de soufflage d'une machine de fabrication de corps creux en matière plastique.

7. Moule (1) selon la revendication précédente, **caractérisé en ce que** les moyens de guidage (10) comprennent un galet (11) solidaire du deuxième crochet (9) par un doigt (12), le galet (11) coopérant avec un chemin de cames solidaire d'un bâti de l'unité de soufflage de la machine de fabrication de corps creux en matière plastique.

8. Moule (1) selon l'une quelconque des revendications précédentes, **caractérisé en ce que** l'un du premier demi-moule (2) et du deuxième demi-moule (3) comprend une butée (13) pour définir le jeu fonctionnel (j) entre la première surface de retenue (82) et la deuxième surface de retenue (92), dans la position de verrouillage du deuxième crochet (9).

9. Moule (1) selon la revendication précédente, **caractérisé en ce que** la butée (13) est une butée de type réglable.

10. Moule (1) selon l'une quelconque des revendications précédentes, **caractérisé en ce que** le deuxième crochet (9) est monté mobile en rotation sur le deuxième demi-moule (3).

## Patentansprüche

1. Form (1) zur Herstellung von Hohlkörpern aus Kunststoff, wobei die Form (1) Folgendes umfasst:
- eine erste Formhälfte (2);
- eine zweite Formhälfte (3);
- ein Scharnier (4), an dem die erste Formhälfte (2) und die zweite Formhälfte (3) drehbar montiert sind,
wobei die Form (1) beweglich ist zwischen:
- einer geschlossenen Position, in der die erste Formhälfte (2) und die zweite Formhälfte (3) miteinander in Kontakt stehen und zwischen einander einen Formhohlraum des herzustellenden Hohlkörpers definieren, und
- eine Öffnungsposition, in der die erste Formhälfte (2) und die zweite Formhälfte (3) voneinander beabstandet sind;
wobei die Form (1) außerdem Mittel (7) zur Verriegelung in der geschlossenen Position umfassen, wobei die Verriegelungsmittel (7) Folgendes umfassen:
- mindestens einen ersten Haken (8) mit einem ersten Hohlraum (81), der fest an der ersten Formhälfte (2) montiert ist,
- mindestens einen zweiten Haken (9), der einen zweiten Hohlraum (91) aufweist, der beweglich an der zweiten Formhälfte (3) montiert ist, wobei der zweite Haken (9) folgende Positionen einnehmen kann:
- eine Verriegelungsposition, in der der erste Haken (8) und der zweite Haken (9) ineinander verschränkt sind, und
- eine Entriegelungsposition, in der der erste Hohlraum (81) und der zweite Hohlraum (91) voneinander beabstandet sind,
wobei der erste Hohlraum (81) des ersten Hakens (8) zur Innenseite der Form (1) gerichtet ist und der zweite Hohlraum (91) des zweiten Hakens (9) zur Außenseite der Form (1) gerichtet ist und wobei der erste Haken (8) eine erste Rückhaltefläche (82) aufweist und der zweite Haken (9) eine zweite Rückhaltefläche (92) aufweist, wobei die zweite Rückhaltefläche (92) in der Verriegelungsposition des zweiten Hakens (9) der ersten Rückhaltefläche (82) gegenüberliegt, wobei die zweite Rückhaltefläche (92) vor einer Druckbeaufschlagung des Formhohlraums ein funktionelles Spiel (j) mit der ersten Rückhaltefläche (82) bildet,
**dadurch gekennzeichnet, dass** das funktionelle Spiel (j) 0,05 mm oder mehr und 0,4 mm oder weniger beträgt.

2. Form (1) nach dem vorangehenden Anspruch, **dadurch gekennzeichnet, dass** die erste Rückhaltefläche (82) und die zweite Rückhaltefläche (92) parallel zueinander sind.

3. Form (1) nach einem der vorangehenden Ansprüche, **dadurch gekennzeichnet, dass** das funktionelle Spiel (j) 0,1 mm oder mehr und 0,2 mm oder weniger beträgt.

4. Form (1) nach einem der vorangehenden Ansprüche, **dadurch gekennzeichnet, dass** in der geschlossenen Position der Form (1) die erste Formhälfte (2) und die zweite Formhälfte (3) an ihrem Kontakt eine Trennebene (P) bilden und dass in der Verriegelungsposition des zweiten Hakens (9) die erste Rückhaltefläche (82) und/oder die zweite Rückhaltefläche (92) einen Winkel (α) mit der Trennebene (P) bilden.

5. Form (1) nach dem vorangehenden Anspruch, **dadurch gekennzeichnet, dass** der Winkel (α) 1° oder mehr und 5° oder weniger, vorzugsweise 2°, beträgt.

6. Form (1) nach einem der vorangehenden Ansprüche, **dadurch gekennzeichnet, dass** sie Mittel (10) zum Führen der Bewegung des zweiten Hakens (9) zwischen seiner Verriegelungsposition und seiner Entriegelungsposition umfasst, wobei die Führungsmittel (10) in einer Bewegungsrichtung der Form (1) in einer Blaseinheit einer Maschine zur Herstellung von Hohlkörpern aus Kunststoff vor den Verriegelungsmitteln (7) positioniert sind.

7. Form (1) nach dem vorangehenden Anspruch, **dadurch gekennzeichnet, dass** die Führungsmittel (10) eine Rolle (11) umfassen, die über einen Finger (12) fest mit dem zweiten Haken (9) verbunden ist, wobei die Rolle (11) mit einer Nockenbahn zusammenwirkt, die fest mit einem Gestell der Blaseinheit der Maschine zur Herstellung von Hohlkörpern aus Kunststoff verbunden ist.

8. Form (1) nach einem der vorangehenden Ansprüche, **dadurch gekennzeichnet, dass** eine der ersten Formhälfte (2) und der zweiten Formhälfte (3) einen Anschlag (13) zum Definieren des funktionellen Spiels (j) zwischen der ersten Rückhaltefläche (82) und der zweiten Rückhaltefläche (92) in der Verriegelungsposition des zweiten Hakens (9) umfasst.

9. Form (1) nach dem vorangehenden Anspruch, **dadurch gekennzeichnet, dass** der Anschlag (13) ein Anschlag vom einstellbaren Typ ist.

10. Form (1) nach einem der vorangehenden Ansprüche, **dadurch gekennzeichnet, dass** der zweite Haken (9) drehbar an der zweiten Formhälfte (3) montiert ist.

## Claims

1. Mould (1) for manufacturing hollow bodies made of plastic material, the mould (1) comprising:
- a first half-mould (2);
- a second-half-mould (3);
- a hinge (4) on which the first half-mould (2) and the second half-mould (3) are mounted so as to be able to move in rotation,
the mould (1) being able to move between:
- a closed position in which the first half-mould (2) and the second half-mould (3) are in contact with one another and define between them an imprint for moulding hollow bodies to be manufactured, and
- an opening position in which the first half-mould (2) and the second half-mould (3) are separated from one another;
the mould (1) also comprising means (7) for locking in the closed position, the locking means (7) comprising:
- at least one first hook (8) having a first cavity (81), mounted fixedly on the first half-mould (2),
- at least one second hook (9) having a second cavity (91), mounted so as to be able to move on the second half-mould (3), the second hook (9) being able to adopt:
- a locking position in which the first hook (8) and the second hook (9) are nested one inside the other, and
- an unlocked position in which the first cavity (81) and the second cavity (91) are separated from one another,
wherein the first cavity (81) of the first hook (8) is oriented towards the inside of the mould (1), and the second cavity (91) of the second hook (9) is oriented towards the outside of the mould (1), and in that the first hook (8) comprises a first retaining surface (82) and the second hook (9) has a second retaining surface (92), the second retaining surface (92) facing the first retaining surface (82) when the second hook (9) is in the locking position, the second retaining surface (92) defining a functional clearance (j) with the first retaining surface (82) prior to pressurization of the moulding imprint, **characterized in that** the functional clearance (j) is greater than or equal to 0.05 mm and less than or equal to 0.4 mm.

2. Mould (1) according to the preceding claim, **characterized in that** the first retaining surface (82) and the second retaining surface (92) are parallel to one another.

3. Mould (1) according to either one of the preceding claims, **characterized in that** the functional clearance (j) is greater than or equal to 0.1 mm and less than or equal to 0.2 mm.

4. Mould (1) according to any one of the preceding claims, **characterized in that**, when the mould (1) is in the closed position, the first half-mould (2) and the second half-mould (3) define, where they are in contact, a joint plane (P), and **in that**, when the second hook (9) is in the locking position, the first retaining surface (82) and/or the second retaining surface (92) form an angle (α) with the joint plane (P).

5. Mould (1) according to the preceding claim, **characterized in that** the angle (α) is greater than or equal to 1° and less than or equal to 5°, and preferably 2°.

6. Mould (1) according to any one of the preceding claims, **characterized in that** it comprises means (10) for guiding the movement of the second hook (9) between its locking position and its unlocked position, the guiding means (10) being positioned upstream of the locking means (7) in a direction of movement of the mould (1) in a blowing unit of a machine for manufacturing hollow bodies made of plastic material.

7. Mould (1) according to the preceding claim, **characterized in that** the guide means (10) comprise a roller (11) secured to the second hook (9) by a finger (12), the roller (11) cooperating with a cam track secured to a frame of the blowing unit of the machine for manufacturing hollow bodies made of plastic material.

8. Mould (1) according to any one of the preceding claims, **characterized in that** one of the first half-mould (2) and the second half-mould (3) comprises a stop (13) for defining the functional clearance (j) between the first retaining surface (82) and the second retaining surface (92), when the second hook (9) is in the locking position.

9. Mould (1) according to the preceding claim, **characterized in that** the stop (13) is a stop of adjustable type.

10. Mould (1) according to any one of the preceding claims, **characterized in that** the second hook (9) is mounted so as to be able to move in rotation on the second half-mould (3).
